# FASCICULE DE BREVET EUROPEEN

(11) **EP 4 127 569 B1**
(45) Date de publication et mention de la délivrance du brevet: **13.03.2024**
(21) Numéro de dépôt: 21720817.2
(22) Date de dépôt: 30.03.2021
(51) Int. Cl.: F24D 3/14, F24D 3/16, B21D 53/04, F28D 1/03, F28F 3/14, F28D 21/00, F28F 3/12, F28F 21/08, F24D 3/12

(54) **MURS ET PLAFONDS CHAUFFANTS-RAFRAICHISSANTS**
KÜHL- ODER HEIZDECKEN UND WÄNDEN
COOLING OR HEATING WALLS AND CEILINGS

(30) Priorité: 02.04.2020 FR 2003290
(43) Date de publication de la demande: 08.02.2023
(73) Titulaire: Ideal Therm, 26300 Alixan (FR)
(72) Inventeur: HIGEL, François, 26200 MONTELIMAR (FR)
(74) Mandataire: IP Trust
(86) Numéro de dépôt international: PCT/FR2021/050558
(87) Numéro de publication internationale: WO 2021/198612

(56) Documents cités:
- EP-A1- 1 227 281
- EP-A2- 0 928 941
- WO-A1-01/59371
- CH-A1- 701 353
- DE-A1- 2 604 879
- DE-A1- 4 426 097

## Description

### Domaine technique

La présente invention concerne un système de transfert thermique par rayonnement pour chauffer ou refroidir une pièce comprenant au moins un élément d'échange de chaleur sous forme d'un panneau formé d'une première plaque et une deuxième plaque reliée à la première plaque, la première plaque et la deuxième plaque étant profilées symétriquement de sorte à former en dehors de zones de contact de la première plaque et de la deuxième plaque un canal d'écoulement agencé en serpentin entre la première plaque et la deuxième plaque pour le passage d'un fluide caloporteur de transfert d'énergie.

### Technique antérieure

Il est connu de chauffer ou de refroidir une pièce par le plafond ou les murs au moyen d'un réseau de tubes contenant un fluide caloporteur circulant dont la température est contrôlée.

Pour cela, des tubes en résille contenant le fluide caloporteur circulant peuvent être incorporés à des plaques de plâtre ou de chaux avant d'habiller les plafonds ou les murs avec les plaques ainsi préparées. Des tubes en cuivre ou en alliage de cuivre, pouvant être soudés entre eux et présenter la forme d'un conduit sinueux ou une forme en serpentin, sont fixés au mur ou au plafond de sorte à présenter un réseau pour le fluide caloporteur circulant. Les tubes sont ensuite recouverts. Pour augmenter le transfert de chaleur, il est connu d'ajouter des ailettes aux tubes, ou encore d'associer des tubes fixés au plafond avec des plaques métalliques formant un faux plafond de diffusion de la chaleur. Néanmoins, dans ce dernier cas le contact entre la plaque métallique de diffusion et les tubes ne contribue pas à une bonne diffusion de la chaleur. Ces systèmes de transfert thermique fonctionnent par rayonnement. Un inconvénient aux agencements cités ci-dessus est une perte d'énergie, une régulation de la température non aisée avec une inertie plus ou moins importante.

Les documents FR2913485, EP2402664, DE102012206187, JPH0719533 ou US5131458 décrivent l'utilisation de tubes pour la circulation de fluide caloporteur ou l'utilisation de panneaux chauffants rafraîchissements par rayonnement intégrant des tubes en cuivre ou aluminium pour assurer le transport de fluide caloporteur.

Afin de répondre aux contraintes environnementales tout en assurant un grand confort en hiver comme en été, les industriels ont cherché à développer de nouveaux systèmes de transfert thermique par rayonnement pour chauffer ou refroidir une pièce ne présentant pas les inconvénients cités ci-dessus.

Le document EP1227281 décrit un exemple de tuile de transfert de chaleur.

### Exposé de l'invention

Le but de l'invention est de proposer un nouveau système de transfert thermique par rayonnement pour chauffer ou refroidir une pièce présentant une haute performance énergétique, un grand confort, avec une facilité et une rapidité d'installation. A cet effet, l'invention a pour objet un système de transfert thermique par rayonnement pour chauffer ou refroidir une pièce selon la revendication 1.

L'invention peut encore présenter les particularités suivantes :
- la première plaque et la deuxième plaque peuvent avoir chacune une épaisseur comprise dans la plage de 2 à 5 mm
- le canal d'écoulement peut présenter une largeur comprise dans la plage de 3 à 10 cm et une hauteur comprise dans la plage de 2 à 4 mm ;
- une des première et/ou deuxième plaque peut comprendre à une extrémité du canal d'écoulement une entrée fluidique et à l'autre extrémité du canal d'écoulement une sortie fluidique de sorte à connecter l'élément d'échange de chaleur à un système de circulation du fluide caloporteur de transfert d'énergie ;
- les éléments d'échange de chaleur peuvent être connectables entre eux ;
- le fluide caloporteur peut être de l'eau ;
- des moyens de fixation sont agencés en bordure du panneau pour le monter sur des éléments de support structural.

L'invention s'étend à un plafond d'une pièce, comprenant un élément de support structural de plafond et un système de transfert thermique par rayonnement selon l'invention tel que définie dans l'une quelconque des revendications 1 à 4, chacun des panneaux du système de transfert thermique étant suspendus à l'élément de support structural de plafond de sorte que chacun des panneaux définit une surface sensiblement parallèle au plafond de la pièce, des moyens étant prévus pour fournir un fluide caloporteur de transfert d'énergie à chaque panneau.

L'invention s'étend encore à un mur d'une pièce, comprenant un élément de support structural de mur et un système de transfert thermique par rayonnement selon l'invention tel que définie dans l'une quelconque des revendications 1 à 8, chacun des panneaux du système de transfert thermique étant accrochés à l'élément de support structural de mur de sorte que chacun des panneaux définit une surface sensiblement parallèle au mur de la pièce, des moyens étant prévus pour fournir un fluide caloporteur de transfert d'énergie à chaque panneau. L'invention peut aussi concerner une dalle de transfert thermique d'une pièce, comprenant un système de transfert thermique par rayonnement selon l'invention tel que définie dans l'une quelconque des revendications 1 à 8, avec des panneaux agencés dans la dalle, des moyens étant prévus pour fournir un fluide caloporteur de transfert d'énergie à chaque panneau.

Selon l'invention le fluide caloporteur vient en contact direct avec les plaques du panneau en circulant dans un volume fermé de façon dirigée le long du canal d'écoulement, permettant ainsi d'obtenir avantageusement une surface d'échange thermique avec pratiquement toute la superficie du panneau. De part la configuration embouties des plaques, la définition du canal d'écoulement est de forme plus anguleuse par rapport à des plaques moulées de l'art antérieur. De plus, la soudure laser des plaques en acier permet de réduire les zones de contact entre les plaques, augmentant ainsi la surface d'échange thermique des canaux. La soudure par laser garantie la fixation des plaques l'une à l'autre ainsi que l'étanchéité du panneau. L'épaisseur des plaques formant le panneau étant réduit, la hauteur du canal d'écoulement est faible, par rapport au diamètre des tubes utilisés dans l'art antérieur, de sorte à pouvoir faire circuler le fluide caloporteur à basse température et de diminuer l'inertie de transfert de chaleur.

Le traitement laser de la surface d'au moins une des plaques, notamment la surface en contact avec le fluide caloporteur dans le canal, permet de créer une sorte de texturisation de surface qui augmente la surface d'échange thermique entre le panneau et le fluide caloporteur circulant de sorte à augmenter le rendement de l'élément d'échange de chaleur par rapport à une plaque non traitée au laser. Enfin, l'élément d'échange de chaleur en acier inoxydable permet d'utiliser n'importe quel fluide caloporteur. Avantageusement, l'utilisation de l'eau comme fluide caloporteur permet de limiter l'entretien du système de transfert thermique par rayonnement pour chauffer ou refroidir une pièce.

### Description sommaire des dessins

La présente invention sera mieux comprise et d'autres caractéristiques et avantages apparaîtront à la lecture de la description détaillée des modes de réalisation pris à titre d'exemples nullement limitatifs et illustrés par les dessins annexés dans lesquels :
la figure 1 est une illustration schématique d'un élément d'échange de chaleur sous forme de panneau selon l'invention avec des vues selon trois coupes A-A, B-B et C-C ;
la figure 2 est une illustration schématique d'un agrandissement de la surface interne texturisée d'un canal d'écoulement d'un élément d'échange de chaleur sous forme de panneau selon l'invention ;
la figure 3 est une illustration schématique d'un élément d'échange de chaleur selon l'invention agencé sur des barres qui sont destinées à suspendre l'élément d'échange de chaleur à un plafond ;
la figure 4 est une illustration schématique d'un élément d'échange de chaleur selon l'invention agencé sur des barres qui sont destinées à accrocher l'élément d'échange de chaleur à un mur ;
la figure 5 est une illustration schématique d'éléments d'échange de chaleur selon l'invention suspendus à un plafond et agencés en damier ;
la figure 6 est une illustration schématique d'éléments d'échange de chaleur selon l'invention accrochés à un mur et agencés en damier.

### Description des modes de réalisation

La présente invention a trait au domaine du chauffage et du rafraîchissement de locaux, par exemple d'une ou de plusieurs pièces d'une maison, par des systèmes de transfert thermique par rayonnement installés au plafond, aux murs, ou encore dans une dalle sous un plancher, par la circulation d'un fluide caloporteur de transfert d'énergie, le fluide circulant dans un ou plusieurs panneaux connectés fluidiquement entre eux, les panneaux étant dit chauffants ou rafraîchissants.

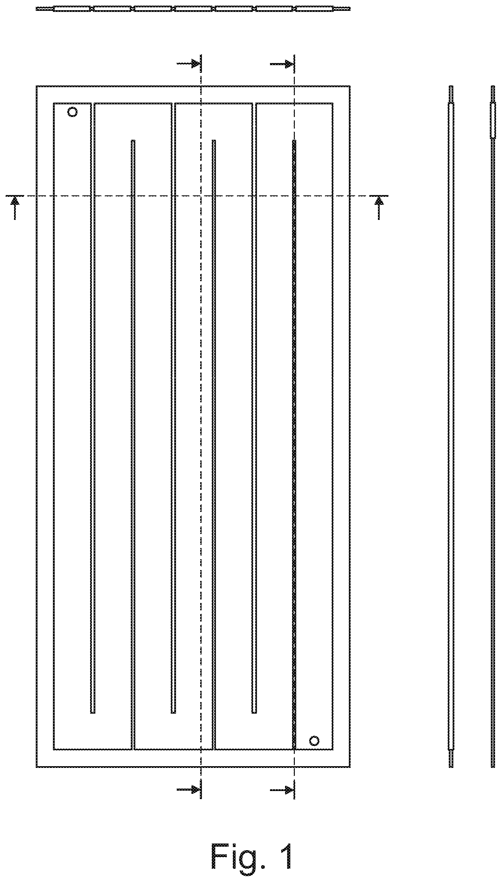

Selon l'invention, pour chauffer ou refroidir par exemple une pièce, le système de transfert thermique comprend au moins un élément d'échange de chaleur sous forme d'un panneau 1 du type de celui illustré sur la figure 1. Le panneau 1 illustré sur la figure 1 mesure ici environ 1m sur 0,45m, mais les panneaux peuvent avoir n'importe quelle taille. Le panneau 1 comprend une première plaque A et une deuxième plaque B reliée à la première plaque A. Pour des raisons de compréhensions mais sans présenter de limitation à la présente invention, la première plaque A sera dite inférieure, c'est-à-dire lorsque le panneau est installé, celle faisant face au volume vide de la pièce à chauffer ou refroidir, la deuxième plaque B sera dite supérieure, c'est-à-dire celle faisant face au plafond, au mur, au sol de la pièce à chauffer ou refroidir. La première A et la deuxième plaque B sont en acier, de préférence en acier inoxydable. Ces plaques A, B sont profilées et peuvent être obtenues par emboutissage de sorte à former sur une des faces de la première plaque A et de la deuxième plaque B un relief. La première plaque A et la deuxième plaque B sont embouties de façon symétrique de sorte que lorsque la première plaque A et la deuxième plaque B sont superposées l'une face à l'autre pour former le panneau 1, des zones de contact sont créées entre elles et par lesquelles la première plaque A et la deuxième plaques B seront reliées, et des zones sans contact sont créées entre elles, ces zones sans contact formant une sorte de canal 3 pour le passage du fluide caloporteur de transfert d'énergie.

Selon l'invention, pour reliées la première plaque A et la deuxième plaque B de façon étanche et ainsi former un volume fermé pour la circulation du fluide caloporteur dans le panneau 1 entre une entrée E et une sortie S, de préférence agencées sur la deuxième plaque B supérieure, la première plaque A et la deuxième plaque B sont soumises à une soudure au laser sur les zones de contact. La soudure au laser s'effectue sur les bords de la première plaque A et de la deuxième plaque B et entre les zones embouties formant le relief qui est orienté vers l'extérieur de la première plaque A et de la deuxième plaque B.

Comme visible sur la figure 1, le canal 3 d'écoulement entre l'entrée E et la sortie S est ici agencé en serpentin. Avantageusement, le fluide caloporteur vient en contact direct avec les plaques du panneau 1 et la configuration en serpentin permet de diriger le fluide caloporteur de sorte que la diffusion de chaleur et la surface d'échange de calories couvrent pratiquement la totalité du panneau. A partir des vues en coupe selon A-A, B-B et C-C de la figure 1, on comprendra mieux la forme du panneau 1 décrit ci-dessus.

Selon l'invention, afin d'optimiser l'échange de calories entre le fluide caloporteur et le panneau 1, la première plaque A et la deuxième plaque B ont chacune une épaisseur choisie comprise dans la plage de 2 à 5 mm, permettant de créer le canal 3 d'écoulement en serpentin s'étendant longitudinalement et présentant par exemple une largeur choisie comprise dans la plage de 3 à 10 cm et une hauteur choisie comprise dans la plage de 2 à 4 mm.

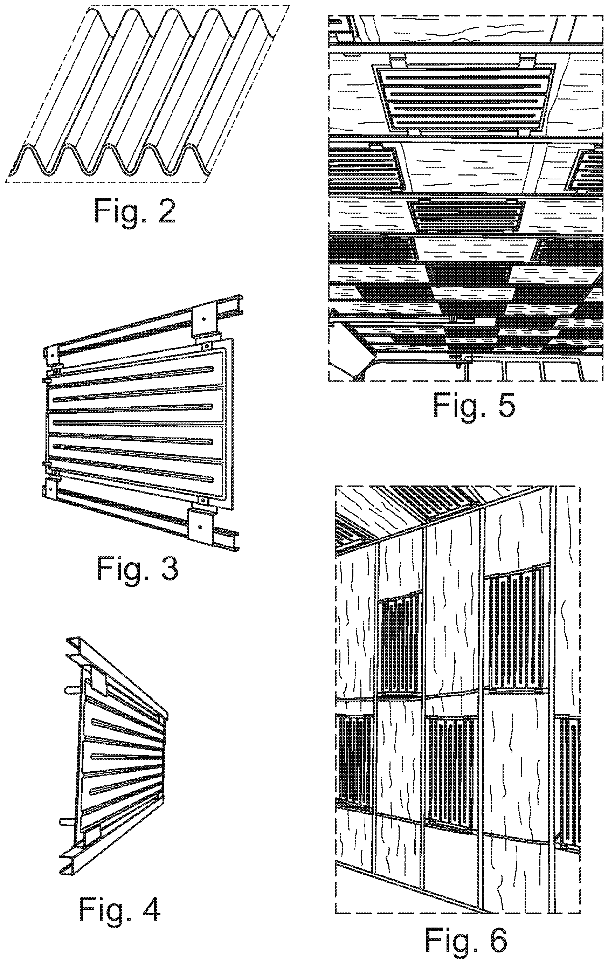

Selon l'invention, une texturisation de surface par laser peut être effectuée sur la surface en contact avec le fluide caloporteur d'au moins une de la première plaque A et de la deuxième plaque B pour augmenter le transfert thermique, tant en mode chaud que froid. Un exemple de texturisation de surface par laser est illustré par des vagues sur la figure 2 correspondant à un agrandissement de la face interne d'un canal 3 d'écoulement. De préférence cette texturisation est effectuée sur la face interne de la première plaque A inférieure, de sorte à augmenter la surface d'échange entre le fluide caloporteur circulant et le panneau 1. En effet, la distance parcourue par le fluide caloporteur est supérieure sur la première plaque A et/ou la deuxième plaque B texturisée intérieurement que sur la première plaque A et/ou la deuxième plaque B non traitée. Un tel traitement peut par exemple augmenter le rendement de 30% de l'élément d'échange de chaleur par rapport à un panneau non traité. Des panneaux 1 présentant une telle texturisation interne mais de taille inférieure à ceux sans texturisation peuvent ainsi être avantageusement utilisés.

Pour connecter l'élément d'échange de chaleur sous forme de panneau 1 à un système de circulation du fluide caloporteur de transfert d'énergie, des tubulures peuvent être serties au niveau de l'entrée E fluidique et de la sortie S fluidique, à chaque extrémité du canal 3 d'écoulement.

Selon la superficie et le volume de la pièce à chauffer ou à refroidir, plusieurs éléments d'échange de chaleur peuvent être nécessaires, de sorte que ceux-ci sont connectables entre eux. Par exemple, une entrée E fluidique d'un premier panneau 1 peut être connecté à une sortie d'un générateur de chaleur par un tuyau de raccordement, la sortie S fluidique du premier panneau 1 pouvant être directement connectée en série par un autre tuyau de raccordement à l'entrée E fluidique d'un deuxième panneau 1 dont la sortie S fluidique peut être connectées par un autre tuyau de raccordement à l'entrée E fluidique d'un troisième panneau 1 etc ... jusqu'à ce que la sortie S fluidique du dernier panneau 1 soit connectée par un dernier tuyau de raccordement à une entrée du générateur de chaleur. Les panneaux 1 ne présentent pas de sens particulier d'écoulement fluidique, ainsi la sortie S et l'entrée E peuvent être inversées. Le montage des panneaux 1 est ainsi facilité.

Avantageusement, le matériau conducteur du panneau 1 d'un système de transfert thermique par rayonnement, comme l'acier inoxydable, permet l'utilisation de n'importe quel fluide caloporteur pour réchauffer ou refroidir une pièce. Le fluide caloporteur peut être de l'eau ou tout autre liquide antigel comme du glycol, ou fluide frigorigène. Dans le cas où le fluide caloporteur est de l'eau, les procédures d'entretien de l'installation peuvent avantageusement se limiter à par exemple un simple rinçage à contre-courant du canal 3 d'écoulement du panneau 1. De plus, le panneau 1 étant étanche à l'air et le matériau du panneau 1 étant en acier inoxydable il n'y a aucun risque d'oxygénation de l'eau ou bien du fluide qui y circule. Enfin, le système de transfert thermique par rayonnement selon l'invention mettant directement en contact le fluide caloporteur avec la surface interne du panneau 1, est un système à basse température. Pour chauffer une pièce, la circulation de fluide caloporteur par exemple entre 23 et 25°C dans les panneaux 1 permet de chauffer la pièce à une température de confort entre 19 et 21°C, et présente l'avantage de fournir une température homogène dans la pièce, sans brassage d'air, sans bruit, et rapidement car présente une faible inertie.

Pour chauffer le fluide caloporteur entre 23 et 25°C, n'importe quel type de générateur de chaleur en mode chauffage peut être utilisé, comme une chaudière à gaz, à fuel, à énergie électrique, une pompe à chaleur ou encore des panneaux solaires, ce qui serait le plus économique et le plus performant.

Pour refroidir une pièce avec le système de transfert thermique par rayonnement selon l'invention, les panneaux 1 peuvent être connectés avec par exemple une pompe à chaleur réversible ou encore être alimentés en eau refroidie par un système à géothermie.

On comprendra que pour l'installation du système de transfert thermique par rayonnement selon l'invention, comme illustré sur les figures 3 et 5, des moyens de fixation 4, 4' peuvent être agencés en bordure du panneau 1 pour le monter sur des éléments de support structural tel que des rails R, R' pour plaques de recouvrement de plâtre par exemple. Ainsi des pattes en acier traitées contre l'oxydation peuvent par exemple venir en pincement au niveau des moyens de fixation 4, 4' en bordure du panneau 1 pour venir le soutenir sur le rail R, R'. Des rails R, R' pouvant être fixés sur un plafond comme par exemple sur la figure 4 ou un mur comme par exemple sur la figure 6, chacun des panneaux 1 d'un système de transfert thermique par rayonnement selon l'invention peut être suspendu à un plafond ou accroché à un mur à l'élément de support structural de plafond ou de mur de sorte que chacun des panneaux 1 définit une surface sensiblement parallèle au plafond ou au mur de la pièce pour une adaptation parfaite à la pièce. Les panneaux 1 en acier pourraient aussi être pré-percés sur les bordures de sorte à faciliter leur fixation sur les rails R, R'.

Au regard des bons rendements, il n'est pas nécessaire que système de transfert thermique par rayonnement selon l'invention équipe l'ensemble de la surface des plafonds et murs. Par exemple, sur les figures 4 et 6, plusieurs panneaux 1 sont agencés en damier mais pourraient être tout aussi bien être alignés. Les panneaux 1 sont connectés fluidiquement entre eux comme décrit précédemment. Les entrées E et sorties S fluidiques sont agencées face au plafond ou du mur de sorte à, ici, ne pas dépasser des rails R, R'. Un isolant 5 réflecteur de chaleur est préalablement installé entre le plafond ou le mur et les éléments de support structural de plafond ou de mur, un espace vide étant prévu entre le panneau 1 et l'isolant 5.

On comprendra que le système de transfert thermique par rayonnement selon l'invention présente une haute performance énergétique, un grand confort. L'installation est aussi très facile et rapide.

Selon l'invention, pour améliorer l'esthétisme, les panneaux 1 peuvent être recouverts de plaques de recouvrement de plâtre, ou directement avec une toile tendue au plafond par exemple. De plus, le panneau 1 peut par exemple supporter tout type de décorations sur la première plaque A inférieure côté pièce.

Le système de transfert thermique par rayonnement selon l'invention peut aussi concerner une dalle de transfert thermique d'une pièce, avec des panneaux 1 agencés dans la dalle, des moyens étant prévus pour fournir un fluide caloporteur de transfert d'énergie à chaque panneau 1.

Le système de transfert thermique par rayonnement selon l'invention peut avantageusement s'intégrer à des bâtiments existants, en doublage ou en cloison. Il va de soi que la présente invention ne saurait être limitée au mode de réalisation exposé plus haut, susceptible de subir des modifications sans pour autant sortir du cadre de l'invention, qui est définie par les revendications.

## Revendications

1. Système de transfert thermique par rayonnement pour chauffer ou refroidir une pièce comprenant au moins un élément d'échange de chaleur sous forme d'un panneau (1) formé d'une première plaque (A) et une deuxième plaque (B) reliée à ladite première plaque (A), ladite première plaque (A) et ladite deuxième plaque (B) étant profilées symétriquement de sorte à former en dehors de zones de contact de ladite première plaque (A) et de ladite deuxième plaque (B) un canal (3) d'écoulement agencé en serpentin entre ladite première plaque (A) et ladite deuxième plaque (B) pour le passage d'un fluide caloporteur de transfert d'énergie, **caractérisé en ce que** ladite première plaque (A) et ladite deuxième plaque (B) sont des plaques embouties en acier et sont reliées entre elles par soudure sur toute la surface des zones de contact de ladite première plaque (A) et de ladite deuxième plaque (B) entre elles, **en ce que** ladite reliure entre lesdites plaques (A, B) est réalisée par soudage au laser, et **en ce qu'**une texture de surface obtenue par traitement au laser est présente sur la surface en contact avec le liquide caloporteur d'au moins une de ladite première plaque (A) et de ladite deuxième plaque (B) pour augmenter ledit transfert thermique.

2. Système de transfert thermique par rayonnement selon la revendication 1, **caractérisé en ce que** ladite première plaque (A) et ladite deuxième plaque (B) ont chacune une épaisseur comprise dans la plage de 2 à 5 mm.

3. Système de transfert thermique par rayonnement selon l'une des revendications précédentes, **caractérisé en ce que** ledit canal (3) d'écoulement présente une largeur comprise dans la plage de 3 à 10 cm et une hauteur comprise dans la plage de 2 à 4 mm.

4. Système de transfert thermique par rayonnement selon l'une des revendications précédentes, **caractérisé en ce que** l'une de ladite première plaque (A) ou de ladite deuxième plaque (B) comprend à une extrémité dudit canal (3) d'écoulement une entrée (E) fluidique et à l'autre extrémité dudit canal (3) d'écoulement une sortie (S) fluidique de sorte à connecter ledit élément d'échange de chaleur à un système de circulation dudit fluide caloporteur de transfert d'énergie.

5. Système de transfert thermique par rayonnement selon l'une des revendications précédentes, **caractérisé en ce que** plusieurs éléments d'échange de chaleur sont connectables entre eux.

6. Système de transfert thermique par rayonnement selon l'une des revendications précédentes, **caractérisé en ce que** ledit fluide caloporteur est de l'eau.

7. Système de transfert thermique par rayonnement selon l'une des revendications précédentes, **caractérisé en ce que** des moyens de fixation (4, 4') sont agencés en bordure dudit panneau (1) pour le monter sur des éléments de support structural.

8. Plafond d'une pièce, comprenant un élément de support structural de plafond et un système de transfert thermique par rayonnement selon l'une quelconque des revendications 1 à 7, chacun desdits panneaux (1) dudit système de transfert thermique étant suspendus audit élément de support structural de plafond de sorte que chacun desdits panneaux (1) définit une surface sensiblement parallèle au plafond de la pièce, des moyens étant prévus pour fournir un fluide caloporteur de transfert d'énergie à chaque panneau (1).

9. Mur d'une pièce, comprenant un élément de support structural de mur et un système de transfert thermique par rayonnement selon l'une quelconque des revendications 1 à 7, chacun des panneaux (1) du système de transfert thermique étant accrochés audit élément de support structural de mur de sorte que chacun desdits panneaux (1) définit une surface sensiblement parallèle au mur de la pièce, des moyens étant prévus pour fournir un fluide caloporteur de transfert d'énergie à chaque panneau (1).

10. Dalle de transfert thermique d'une pièce, comprenant un système de transfert thermique par rayonnement selon l'une quelconque des revendications 1 à 7, avec des panneaux (1) agencés dans ladite dalle, des moyens étant prévus pour fournir un fluide caloporteur de transfert d'énergie à chaque panneau (1).

## Patentansprüche

1. Wärmeübertragungssystem durch Strahlung zum Heizen oder Kühlen eines Raums, umfassend mindestens ein Wärmeaustauschelement in Form eines Paneels (1), das aus einer ersten Platte (A) und einer zweiten Platte (B), die mit der ersten Platte (A) verbunden ist, gebildet ist, wobei die erste Platte (A) und die zweite Platte (B) derart symmetrisch profiliert sind, um außerhalb der Kontaktzonen der ersten Platte (A) und der zweiten Platte (B) einen Strömungskanal (3) zu bilden, der schlangenförmig zwischen der ersten Platte (A) und der zweiten Platte (B) für den Durchgang eines Wärmeträgerfluids zur Energieübertragung angeordnet ist, **dadurch gekennzeichnet, dass** die erste Platte (A) und die zweite Platte (B) tiefgezogene Stahlplatten sind und miteinander durch Schweißen über die gesamte Oberfläche der Kontaktzonen der ersten Platte (A) und der zweiten Platte (B) zwischen ihnen verbunden sind, **dadurch, dass** die Bindung zwischen diesen Platten (A, B) durch Laserschweißen erfolgt und **dadurch, dass** die Oberflächentextur, die durch die Laserbehandlung erhalten wurde, auf der Oberfläche vorliegt, die in Kontakt mit der Wärmeträgerflüssigkeit von mindestens einer der ersten Platte (A) und der zweiten Platte (B) steht, um die Wärmeübertragung zu erhöhen.

2. Wärmeübertragungssystem durch Strahlung nach Anspruch 1, **dadurch gekennzeichnet, dass** die erste Platte (A) und die zweite Platte (B) jeweils eine Dicke im Bereich von 2 bis 5 mm aufweisen.

3. Wärmeübertragungssystem durch Strahlung nach einem der vorstehenden Ansprüche, **dadurch gekennzeichnet, dass** der Strömungskanal (3) eine Breite im Bereich von 3 bis 10 cm und eine Höhe im Bereich von 2 bis 4 mm aufweist.

4. Wärmeübertragungssystem durch Strahlung nach einem der
vorstehenden Ansprüche, **dadurch gekennzeichnet, dass** eine der ersten Platte (A) oder der zweiten Platte (B) an einem Ende des Strömungskanals (3) einen Flüssigkeitseinlass (E) und am anderen Ende des Strömungskanals (3) einen Flüssigkeitsauslass (S) umfasst, um das Wärmeaustauschelement an ein Kreislaufsystem des Wärmeträgerfluids zur Energieübertragung anzuschließen.

5. Wärmeübertragungssystem durch Strahlung nach einem der vorstehenden Ansprüche, **dadurch gekennzeichnet, dass** mehrere Wärmeaustauschelemente miteinander anschließbar sind.

6. Wärmeübertragungssystem durch Strahlung nach einem der vorstehenden Ansprüche, **dadurch gekennzeichnet, dass** das Wärmeträgerfluid Wasser ist.

7. Wärmeübertragungssystem durch Strahlung nach einem der vorstehenden Ansprüche, **dadurch gekennzeichnet, dass** die Befestigungsmittel (4, 4') an der Umrandung des Paneels (1) angeordnet sind, um dieses auf den tragenden Bauteilen zu montieren.

8. Decke eines Raums, umfassend ein tragendes Bauteil der Decke und ein Wärmeübertragungssystem durch Strahlung nach einem der Ansprüche 1 bis 7, wobei jedes der Paneele (1) des Wärmeübertragungssystems an das tragende Bauteil der Decke aufgehängt wird, sodass jedes der Paneele (1) eine Oberfläche im Wesentlichen parallel zur Decke des Raums definiert, wobei Mittel zum Bereistellen eines Wärmeträgerfluids zur Energieübertragung an jedes Paneel (1) vorgesehen sind.

9. Wand eines Raums, umfassend ein tragendes Bauteil der Wand und ein Wärmeübertragungssystem durch Strahlung nach einem der Ansprüche 1 bis 7, wobei jedes der Paneele (1) des Wärmeübertragungssystems an das tragende Bauteil der Wand gehängt wird, sodass jedes der Paneele (1) eine Oberfläche im Wesentlichen parallel zur Wand des Raums definiert, wobei Mittel zum Bereistellen eines Wärmeträgerfluids zur Energieübertragung an jedes Paneel (1) vorgesehen sind.

10. Bodenplatte zur Wärmeübertragung eines Raums, umfassend ein Wärmeübertragungssystem durch Strahlung nach einem der Ansprüche 1 bis 7, wobei die Paneele (1) in der Bodenplatte angeordnet sind, wobei Mittel zum Bereistellen eines Wärmeträgerfluids zur Energieübertragung an jedes Paneel (1) vorgesehen sind.

## Claims

1. Radiant heat transfer system for heating or cooling a room comprising at least one heat exchange element in the form of a panel (1) formed by a first plate (A) and a second plate (B) connected to said first plate (A), said first plate (A) and said second plate (B) being symmetrically profiled so as to form, outside contact areas of said first plate (A) and said second plate (B), a flow channel (3) arranged in a serpentine manner between said first plate (A) and said second plate (B) for the passage of a heat transfer fluid, **characterized in that** said first plate (A) and said second plate (B) are pressed steel plates and are connected to each other by welding over the entire surface of the contact areas between said first plate (A) and said second plate (B), **in that** said connection between said plates (A, B) is made by laser welding, and **in that** a surface texture obtained by laser treatment is present on the surface in contact with the heat transfer liquid of at least one of said first plate (A) and said second plate (B) to increase said heat transfer.

2. Radiant heat transfer system according to claim 1, **characterized in that** said first plate (A) and said second plate (B) each have a thickness in the range of 2 to 5 mm.

3. Radiant heat transfer system according to either of the preceding claims, **characterized in that** said flow channel (3) has a width in the range of 3 to 10 cm and a height in the range of 2 to 4 mm.

4. Radiant heat transfer system according to any one of the preceding claims, **characterized in that** one of the said first plate (A) or said second plate (B) comprises at one end of said flow channel (3) a fluid inlet (E) and at the other end of said flow channel (3) a fluid outlet (S) so as to connect said heat exchange element to a system for circulating said energy transferring heat transfer fluid.

5. Radiant heat transfer system according to any one of the preceding claims, **characterized in that** several heat exchange elements may be interconnected.

6. Radiant heat transfer system according to any one of the preceding claims, **characterized in that** said heat transfer fluid is water.

7. Radiant heat transfer system according to any one of the preceding claims, **characterized in that** fastening means (4, 4') are arranged at the edge of said panel (1) to mount it on structural support elements.

8. Ceiling of a room, comprising a structural ceiling support element and a radiant heat transfer system according to any one of claims 1 to 7, each of said panels (1) of said heat transfer system being suspended from said structural ceiling support element such that each of said panels (1) defines a surface substantially parallel to the ceiling of the room, means being provided to supply an energy transferring heat transfer fluid to each panel (1).

9. Wall of a room, comprising a structural wall support element and a radiant heat transfer system according to any one of claims 1 to 7, each of the panels (1) of the heat transfer system being suspended from said structural wall support element such that each of said panels (1) defines a surface substantially parallel to the wall of the room, means being provided to supply an energy transferring heat transfer fluid to each panel (1).

10. Heat transfer slab of a room, comprising a radiant heat transfer system according to any one of claims 1 to 7, with panels (1) arranged in said slab, means being provided to supply an energy transferring heat transfer fluid to each panel (1).
